# EUROPEAN PATENT SPECIFICATION

(11) **EP 1 119 177 B1**
(45) Date of publication and mention of the grant of the patent: **07.04.2004**
(21) Application number: 00310644.0
(22) Date of filing: 30.11.2000
(51) Int. Cl.: H04N 1/393, H04N 1/41

(54) **Method and system for receiving input-image data**
Verfahren und System zum Empfangen von Eingabe-Bild-Daten
Méthode et système pour recevoir des données d'images à introduire

(30) Priority: 29.12.1999 US 474596
(43) Date of publication of application: 25.07.2001
(73) Proprietor: Hewlett-Packard Company, A Delaware Corporation, Palo Alto, CA 94304 (US)
(72) Inventor: Epstein, Yoav, San Diego, CA 92123 (US); Bayerle, Dean, Poway, CA 92064 (US); Niemann, Mark, San Diego, CA 92116 (US); Chen, Iue-Shuenn, San Diego, CA 92127 (US)
(74) Representative: Jehan, Robert

(56) References cited:
- EP-A- 0 814 615
- RONALD G. MATTESON: "A guaranteed data compression technique for pictoral inputs" XEROX DISCLOSURE JOURNAL, vol. 8, no. 4, 1983, page 365 XP002173629
- C. S. MORAITIS AND J. G. MAISTROS: "A microcumputer system for real time digitized image compression" ICIASF '85 RECORD, 26 - 28 August 1985, pages 133-139, XP002193293
- PATENT ABSTRACTS OF JAPAN vol. 1999, no. 08, 30 June 1999 (1999-06-30) & JP 11 075185 A (SANYO ELECTRIC CO LTD), 16 March 1999 (1999-03-16)

## Description

This invention relates generally to image-related devices, for example economical devices for consumer use, such as incremental printers, small LCD or other video displays that are processor operated, scanners, digital cameras and the like - especially such devices whose memory is to be limited - and apparatus and methods that facilitate transfer of data to and from such devices. In this document the phrase "memory is to be limited" encompasses memory that in fact is limited.

A closely related document is British patent application No. GB-A-2,360,163.

EP-A-0,814,615 discloses a MPEG decoder which exhibits reduced memory operating modes which allow a significant reduction in the amount of memory required to decode high definition image sequences. These modes involve compressing video frames to be stored in memory and selectively horizontally filtering and decimating pixel data within the decoder loop. For example, in one mode the system provides compression after horizontal detail reduction by low pass filtering and down-sampling. Processing by 8 x 8 pixel blocks is disclosed as having been found to work well with the compression scheme.

(a) The problems of data transmission into a memory that is to be limited - The present invention arose through attempts to store and print JPEG-compressed images received by an incremental printer, from a digital camera, by means of an infrared link. For best economy, the printer is provided with only a small memory.

Because the images are received only once, they should be stored in memory - but these images, as sent by the camera, may require more memory than is available to store them. Some common approaches to dealing with this situation have their own drawbacks, as will be explained below.

The difficulties encountered in this context, however, are common to other situations involving a memory that is to be limited. For example, the same digital camera may have a small LCD display for viewing thumbnail images of individual pictures while they are still in the camera.

The amount of data that represents a full image seen on that display is far smaller than what is available for the same image, on the main memory chip for the same camera. Data for the thumbnail display are therefore advantageously transmitted within the camera into a highly compressed form for storage and presentation.

Thus the more-general problem is that an image data set from a source may be considerably larger than needed, or than it is possible to use, in presentation. The result may be wasted transmission time and storage space, if the system uses the whole data set. Another manifestation of the problem, aside from unwillingness to waste storage space, is that there simply may not be enough storage available.

These various difficulties are not limited to photographic images. Rather they extend as well to data sets representing image-like information such as topological-style terrain maps - provided only that the data, like photographic information, can be used even if rendered in an approximate way.

(b) Known procedure when intermediate memory is adequate - Perhaps the most interesting side of this general problem is the inadequacy of one well-known methodology that is commonly employed in these situations.

That technique is to decompress each image, as it comes in, and then recompress making the data set smaller for the same image - thereby guaranteeing that all the images fit into the allotted memory. This is a particularly simple and appealing approach because JPEG compression and decompression algorithms have to be available in the system anyway, and are capable of extremely high compression ratios with only minimal loss of perceived image quality.

A major disadvantage, however, is that passing the image through plural generations of decompression and/or compression (e.g., of JPEG compression) - at least for closely similar image sizes - introduces artifacts into the images as eventually presented (displayed, printed, etc.). These artifacts are often very readily perceptible as evident defects in the presented image.

Such artifacts sometimes arise through rounding errors, or because data blocks employed in compression at the different stages do not match one another, or through interactions between these phenomena - or in still other ways. Hence it is very desirable to avoid such serial decompression and recompression - at least without some compensating action.

Another side of the same problem is that not all images to be transferred may in fact involve such size relationships. In systems or methods which must accept a variety of input image data sets - or which may be called upon to present images at a variety of output resolutions - it becomes necessary to provide a robust solution despite such varying demands.

(c) Conclusion - Thus problems of data handling have continued to impede achievement of uniformly excellent but rapid transmission and presentation of images and image-like data in small, economical systems. Thus important aspects of the technology used in the field of the invention remain amenable to useful refinement.

The present invention seeks to provide improved image compression.

According to an aspect of the present invention, there is provided a method of receiving input image data as specified in claim 1.

According to another aspect of the present invention, there is provided an image-related device as specified in claim 9.

In the preferred embodiments, several aspects or facets can be used independently, although they are preferably employed together to optimize their benefits.

In preferred embodiments of a first facet or aspect, there is provided a method for receiving input-image data in an image-related device having a memory whose use is to be limited. The method includes the step of receiving a data stream containing the data and substantially corresponding to a series of successive strips of an image.

Another preferred step of the method is establishing minimum units of processing that are related to a format of the data stream, and also to an output-image format. In addition each minimum processing unit (MPU) is related to the steps recited below.

Three other steps may be performed during the receiving step, and after receiving data for at least a first of the minimum units of processing. These other steps include:
downsampling, in at least one direction, the data for the first received minimum unit of processing,
then accumulating the downsampled data for at least a second of the minimum units of processing, and
then compressing the accumulated downsampled data.

The foregoing may constitute a description or definition of a first facet in its broadest or most general form.

Using intermediate memory - If an intermediate memory (for instance, memory in an associated general-purpose computer) is available at least temporarily - in particular during data transmission - then the minimum units of processing can be made equal to the entire image. In this case the process is performed on the whole image in one chunk.

Even in this case the downsampling introduces a great benefit, as the downsampled image can be recompressed without significant concern for introduction of artifacts. The data can then be stored in a very small memory such as typically and economically provided in a display device such as a printer, a camera thumbnail display, etc.

Direct transfer ― If no such large intermediate memory is available, however ― for instance, if a digital camera is IR-linked directly to a printer as outlined earlier - then the procedure is modified to use less memory by decompressing and downsampling only part of the image at a time. In this case, each of the "minimum units of processing" is made, e.g., a small fraction of the overall image.

In particular, because each minimum processing unit is a small fraction of the image, the memory required to hold the data accumulations before they can be downsampled or compressed - respectively - can be made quite small. (Of course the memory required to hold the entire compressed data set is inherently small, as already noted.)

Hence the total memory needed is much smaller than what would be required if data for the entire image were received before beginning compression. It will be understood that the steps of the method can be iterated many times to eventually acquire the entire compressed image - and yet, because of the piecemeal operation, a memory of very modest size can comfortably accommodate the overall process for a rather large input data set.

Those skilled in the art will thus appreciate that the effectiveness of this strategy relies upon informed and judicious choice and usage of the minimum processing units. Optimization of such tactics in turn depends, as will be seen, on careful analysis of the structural characteristics underlying the compression process.

Although the receiving-and-downsampling of the first processing unit is iterated to accumulate the second processing unit - and the accumulation-and-compression of the second processing unit is then iterated to accumulate the entire output image - yet these forms of iteration are benign. Because particular pieces of an image are not passed through multiple generations of processing, but only layered systematically into the output image, these iterations do not create the kinds of image artifacts or defects noted in the preceding section of this document.

This embodiment is preferably practiced in conjunction with certain other features or characteristics that further enhance enjoyment of overall benefits - such as, for instance, configuration of the minimum processing units as mentioned just above.

For example, in the direct-transfer case it is preferable to make the units of processing a small fraction of the image, for the reasons already mentioned. Such a fraction for instance may be one-quarter or, say, one-fortieth (1/40). For image-related devices which store or present the image in quite small format, the fraction may be much smaller - for example less than one-thousandth.

Also it is preferred that the first unit of processing be at least a partial strip of the input image, that "at least partial strip" containing enough information to enable the downsampling. In this case, a still further preference is that the first unit of processing be a full strip of the input image, the full strip including at least one full pixel column or row.

It is also preferred that the second unit of processing be at least a partial strip of an output image to be presented by the image-related device, this second at-least-partial-strip - analogously to the first partial strip mentioned - containing enough information to enable the compressing. In this case, a further preference is that the second unit of processing be a full strip of the output image, this full strip including at least one full pixel column or row.

Another basic preference is that the downsampling step include downsampling the data to a pixel dimension of the received strip as it is to be used in the image-related device. Yet another is that the compressing step include JPEG compression, or include data formatting which is of a type associated with TIFF files.

Thus, as those skilled in this field will now recognize, the techniques of this invention are very powerful for they enable extraordinarily memory-efficient handling of these very useful and ubiquitous file types. The two types are discussed together here only for the sake of convenience, and it will be understood that embodiments of the invention related to these file types are highly distinct from one another in both concept and implementation.

Analogously, another preference is that the accumulating step include accumulating enough of the downsampled data to enable JPEG compression of a strip of the image as it is to be used in the image-related device - or TIFF formatting of a portion of the image as it is to be used in the image-related device.

For some file formats, preferably the accumulating step comprises accumulating at least enough of the downsampled data to represent at least one discrete-cosine-transformable block of the image as it is to be used in the image-related device, for application of a discrete cosine transform thereto. More specifically such a block is advantageously an eight-by-eight-pixel block of that output image - and still more advantageously the invention accumulates a strip of such eight-by-eight-pixel output-image blocks.

Earlier in this document it is pointed out that iterations of decompression and compression can corrupt files in the sense of introducing visible and objectionable discontinuities or color error into images. Although this remains true for images that are later, or earlier, processed, nevertheless it is possible to use the teachings herein for data that have been, for example, previously compressed.

Such usage is desirable if that is the only way to gain access to the previously compressed data. Accordingly another preference with respect to the first facet or aspect is that the receiving step include receiving compressed data; and that the method further include the step of - before the downsampling step - decompressing the received data.

A more general preference is helpful particularly for file formats in which large compression factors are obtain through discrimination of fine chromatic detail - to which the eye is insensitive. This preference is to include an additional step, before the downsampling step: if the data are not already expressed in a luminance/chrominance color space, the data are transformed into such a color space. This step facilitates discriminatory treatment of chromatic details of different fineness (spatial frequency).

Another general preference is the further step of then storing the compressed data for use in the image-related device. Yet another general preference is that the downsampling step be performed in only the horizontal direction or only the vertical direction; this case corresponds particularly to a related preference - that the first unit of processing be substantially a single horizontal or vertical pixel row.

In preferred embodiments of a second facet, there is provided a method for receiving input-image data in an image-related device having a memory whose use is to be limited. The method may include the step of receiving a data stream containing the data and corresponding to a series of successive strips of the image.

Another preferred step determines whether the data stream represents an overall pixel dimension greater than desired in the image as it is to be used in the image-related device. If so (that is, if the determining step in fact determines that the data stream does represent such a greater overall pixel dimension), then the method preferably includes these additional steps during the receiving step, after receiving data for at least a partial strip of the input image:
downsampling the received data,
accumulating the downsampled data for at least one partial strip of the input image,
compressing the accumulated data for at least a partial strip of the image as it is to be used in the image-related device, and
storing the compressed data for use in the image-related device.

The foregoing may constitute a description or definition of the second facet in its broadest or most general form. Even in this general form, however, it can be seen that this facet too significantly mitigates the difficulties left unresolved in the art.

In particular, this embodiment differs from the previously discussed embodiment with respect to the contingent nature of this second facet. The procedure is followed if it is established that the data stream represents more detail - i.e., more overall resolution - than the image-related device can or will use.

Accordingly this method preferably enables an image-related device to achieve all the benefits discussed above for the first aspect of the invention. In addition, however, it does so without impairing the ability of the device to deal with data that are inconsistent with the operating assumptions underlying that first aspect of the invention.

Again, although this second embodiment in its broad form thus represents a significant advance in the art, it is preferably practiced in conjunction with certain other features or characteristics that further enhance enjoyment of overall benefits.

For example, it is preferred - if the data stream does not represent an overall pixel dimension greater than desired in the image as it is to be used in the image-related device - to then use a different procedure for storing information from the data stream. (Merely by way of example, one straightforward approach may be to acquire the entire image without compression.)

In preferred embodiments of a third facet, there is provided an image-related device having a memory whose use is to be limited. The device includes a data receiver for receiving a data stream containing image data and corresponding to a series of successive strips of an image.

The device preferably also includes at least parts of a programmed processor and memory for:
downsampling the received data for at least part of a strip in the series as received,
accumulating the downsampled data for at least part of one received strip,
compressing the accumulated data for at least part of an image strip to be presented, and
storing the compressed data for presentation.
Finally the device includes elements for presenting the image based upon the stored compressed data.

The foregoing may represent a description or definition of the third facet in its broadest or most general form. Even as couched in these broad terms, however, it can be seen that this embodiment importantly advances the art.

In particular, this embodiment provides a system for obtaining the benefits of the methods discussed earlier - and also further develops those benefits by including mechanisms for actually forming the advantageously transferred image in some presentation. The terms "presenting" and "presentation" as used here refer to some physical manifestation on paper, or on a display medium (for instance a screen), or otherwise actually embodied as for example through three-dimensional lithography.

Although this embodiment significantly advances the art, nevertheless to optimize enjoyment of its benefits it is preferably practiced in conjunction with certain additional features or characteristics. In particular, preferably at least part of the programmed processor and memory includes:
an application-specific integrated circuit, or
firmware and a memory operating in the image-related device; or
a printer driver or display driver, operating in an associated general-purpose computer or raster image processor.

Another preference is that the data receiver include an infrared data link for accepting the data stream from a digital camera. Still another preference is that data receiver include some means for receiving compressed data; and that the invention further include some means for decompressing the received data before downsampling.

Another preference is that the presenting elements be for presenting the received strip with a particular pixel dimension; and that the programmed processor include some means for downsampling the received data to that particular pixel dimension. Yet a further preference is that the programmed processor include some means for formatting the data in a format associated with TIFF files, or for compressing the accumulated data by JPEG compression. (Again these two cases are to be regarded as distinctly different from one another.)

As mentioned in conjunction with the first embodiment described above, the structuring of the "minimum processing units" can be particularly advantageous in practical situations. The same is true for other features under consideration now.

Accordingly a further preference is that the programmed processor and memory include some means for accumulating at least enough of the downsampled data to satisfy some rational criterion related to operation. Some usable criteria include the following:
sufficient data to enable JPEG compression of a strip of the image as it is to be printed,
enough data to represent at least one discrete-cosine-transformable block of the image as it is to be presented, for application of a discrete cosine transform thereto,
enough of the downsampled data to represent at least one eight-by-eight-pixel block of the image as it is to be presented, for application of a discrete cosine transform thereto, and
enough of the downsampled data to represent a strip of eight-by-eight-pixel blocks of the image as it is to be presented, for application of a discrete cosine transform thereto.
It will be understood that within the scope of the invention a skilled practitioner in this field may advantageously employ one or more of these enumerated criteria.

Preferences previously enunciated are applicable here as well (and conversely those mentioned here may be applied in regard to those earlier-discussed facets). Thus for instance there is preferably included some means for transforming the data into a luminance/chrominance color space before downsampling, if the data are not already expressed in a luminance/chrominance color space.

Further preferably the device is either a printer or a display unit; and the forming elements are respectively either elements for marking the image onto a hardcopy printing medium or active video pixels. Other presentation provisions mentioned above are useful, but these two are deemed the most highly preferable by virtue of their very broad range of applications.

Another preference applicable to the several embodiments is that the downsampling and accumulation steps be iterated, preparatory to the compressing step, so that a suitable amount of data is then made available at once for accumulation. Analogously the compressing step is advantageously iterated so that an entire amount of data needed to represent an image - or at least some meaningful or sensible portion of an image - can be presented at once. For instance, in the case of images coded for progressive presentation, the foregoing terminologies are to be understood as construed broadly to encompass the successive partial image data that enable presentation of progressively better-resolved partial images successively.

An embodiment of the present invention is described below, by way of example only, with reference to the accompanying drawings, in which:
Fig. 1 is a graphical representation showing how data are compressed ― particularly if an entire image can be manipulated at once, as for instance in an intermediate memory;
Fig. 2 is a like representation showing how the same task can be accomplished if no such intermediate memory is available, and a piecemeal-processing form is employed;
Fig. 3 is a pair of comparative tabulations, Tables A and B for 12 and 8 pixel/mm (300 and 200 pixel per inch) final output respectively, illustrating the importance of contingent processing in some embodiments;
Fig. 4 is a block-diagrammatic representation of a preferred system; and
Fig. 5 is a flow diagram of a preferred method.

### 1. INPUT DATA

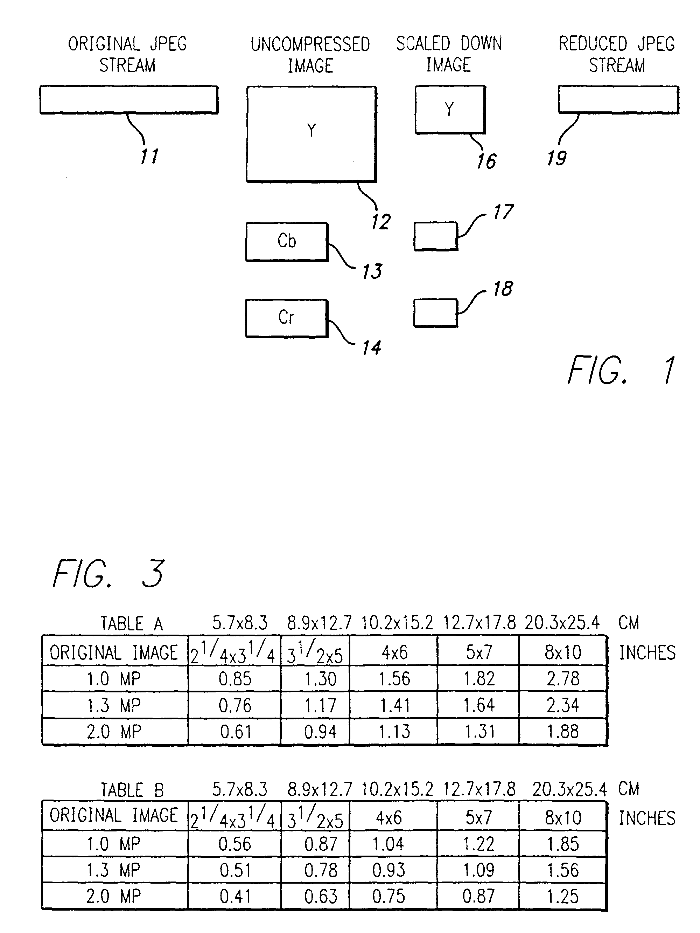

The apparatus and methods of preferred embodiments described below may begin their work with a data set, or data stream, that is either compressed data 11 (Fig. 1) or already-decompressed data 12-14. The compression regime suggested in the illustration is JPEG, but as mentioned earlier the invention is applicable to other data formats.

Most image-like data files have header blocks containing various details such as the type of formatting employed in preparing the file, and various parameters used in the preparation, etc. - to enable proper extraction of some approximation to the original information. If the data are being transmitted within an essentially closed system, however, most or all such information is typically omitted from the file because the receiving system and method can be designed on the basis of that information.

One way to manage the uncompressed image data is in the form of three color-space dimensions - namely the luminance Y (12) and two chromatic parameters Cb (13) and Cr (14). Loosely speaking, the latter two parameters convey all the information required to establish the hue and saturation.

The utility of this color space is well-known from its broad application in broadcast video. It is particularly noteworthy that the human eye is insensitive to moderate-size errors or relatively coarse resolution in the chromatic variables Cb, Cr - provided that the luminance Y is acceptable.

This fact is at the root of the compression strategy embodied in JPEG and some other file-formatting schemes, for it enables a user to select a "quality" level, over an extremely broad range of such levels, which discriminates against relatively fine detail in the chromatic information. A user's selected "quality" value defines, predominantly, what coarseness of chromatic detail - and what amount of hue error - will be tolerated in the interest of compactness for storage and transmission purposes.

Because of the visual insensitivity noted above, even a rather low quality selection is ordinarily perceived as acceptable. This is true even though the associated data compression can be quite extreme - such as, for instance, one-half order of magnitude to more than two orders of magnitude. A smaller proportion of the achieved compression is taken in the luminance data than in the chromatic.

At this writing, good useful introductory information about these concepts - and JPEG compression generally - is conveniently available on the WorldWide Web starting at: http://www.faqs.org/faqs/jpeg-faq/partl/preamble.html and http://www.faqs.org/faqs/compression-faq/partl/, both primarily due to Mr. Thomas G. Lane. His helpful personal assistance to the writer of this patent document is gratefully acknowledged. Included in those materials is considerable further bibliographic guidance.

The luminance-chrominance approach, however, is not at all a required way of using the present invention. Very much to the contrary, the present inventors actually make very good use of the invention in a system that handles the data wholly in RGB (additive red, green and blue lights) color space.

That system need not be used for JPEG files, and is very practical in various other situations. Hence the notations in Fig. 1 are only exemplary, and for purposes of this description the image data may be represented in essentially any three variables 12-14 of machine color space or perceptual color space.

In the foregoing discussion it was assumed that the data are received as an uncompressed or decompressed data stream 12-14. If this is not so, and if the data are instead acquired as a compressed stream 11, then the method (or apparatus) begins with a preliminary step of decompressing that data stream 11 to obtain the decompressed data stream 12-14.

### 2. TAKING ADVANTAGE OF DOWNSAMPLING

In preferred embodiments, the three components of the decompressed image data 12-14 are scaled down to the final or desired file size 16-18. This may also be expressed in terms of the final or desired resolution: here the term "resolution" is not used in a spatial or visual sense, but rather simply to mean the overall number of pixels that will be employed to print, display or otherwise present the image in its end use.

Only after the data are thus downsampled to the appropriate final size is the additional step of compressing (or recompressing) performed. Again, this may be a JPEG or TIFF formatting or some other very different procedure.

This scaling-down of the image information 12-14 to 16-18 naturally is valuable in reducing required storage space as well as data-bus operating time. Equally or more important, with respect to generation of artifacts a significantly smaller file usually behaves essentially as a new data set in the following compression or recompression stage.

This latter effect may be due to a general decorrelation between the functional data blocks used at this stage and like data blocks used in any earlier formatting stage. For instance, interactions between rounding errors in two such stages, or even beat-like interactions between the sizes of the blocks, are generally destroyed in the downsampling process.

In any event, the observed result is that perceptible image defects in the stored or onward-transmitted data set 19 are substantially avoided. To all practical intents and purposes, the artifacts noted in the prior art are eliminated and the data set can be used for printing, display or other presentation without generating any such objectionable elements.

### 3. PIECEMEAL PROCESSING

Consideration of Fig. 1 reveals that the entire uncompressed or decompressed image 12-14 is, implicitly, held in memory all at once. Furthermore the entire data set implicitly is downsampled, too, all at once.

Consequently this strategy requires a still larger memory to hold - also at the same time - the portions of the data dynamically in progress at any moment, as well as the entire scaled-down data set being developed. While such operation is within the scope of certain of the appended claims, the present invention also provides strategies for avoiding such requirements, to enable use of a very small memory.

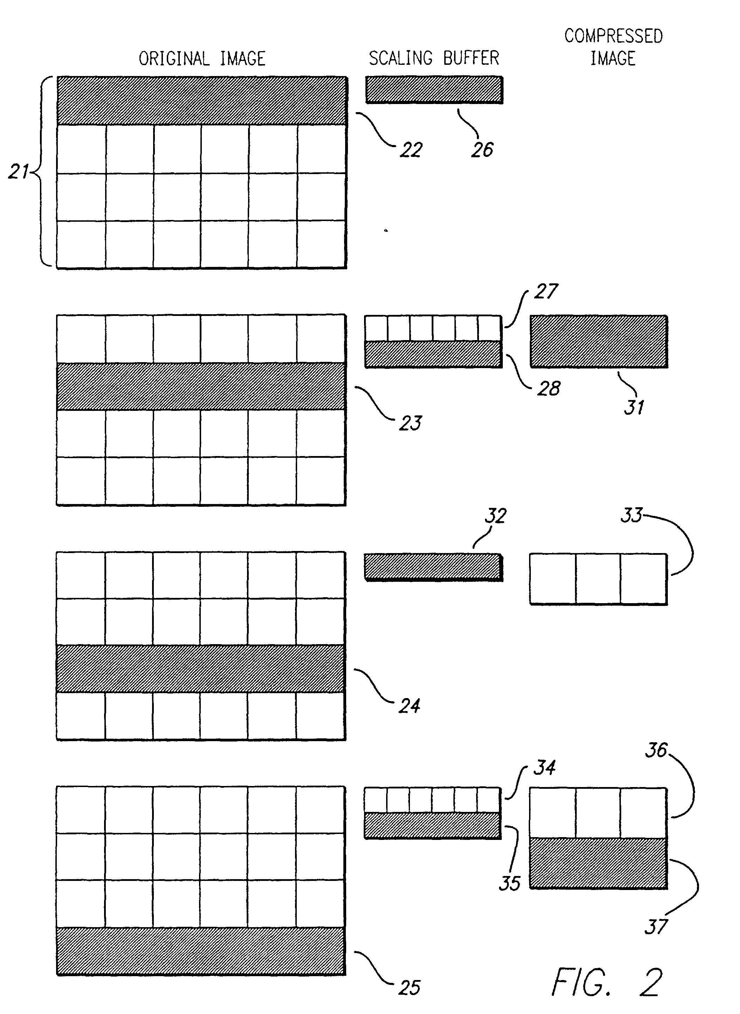

In accordance with these strategies, the processing of an entire image 21 (Fig. 2) is instead done in strips 22-25, or more generally in increments of preferably predefined minimum processing units. For instance a few rows can be scaled down and then compressed or recompressed, and finally passed on for storage or forward transmission.

Consider first a case of only modest complexity, with the first and second units of processing set to one-quarter of the input image and one-half of the output image, respectively. The first strip 22, which thus may be the top quarter of the original image, is downsampled isotropically (i.e. by the same factor vertically and horizontally) to form a smaller strip 26 in the sample buffer.

The reduction in the illustrated example is by about a factor of two in each dimension. Therefore the amount of data 26 in the buffer, now representing the original strip 22, is only a quarter the amount of data in that original strip 22.

Next this treatment of the first strip 26 is iterated for the second. More specifically the first reduced strip 26 is retained in the buffer as at 27 while a second piece 23 of the original image - the second quarter of that image - is downsampled and shifted into the same buffer, where it forms a second small strip 28. The reduction of the second strip 23, 28 is, like the first strip, by a factor of two in each dimension.

Consequently the two strips 27, 28 of data now accumulated in the buffer - representing the downsampled top half of the image - now equal one-quarter the amount of data in the top half 22-23 of the original image 21. The accumulated reduced data 27-28 are next compressed for output or storage.

In the illustrated case, for purposes of clarity only, the amount of compression has been chosen to be by a factor of unity - which is to say, the data are not really shown compressed at all, though they may be changed in format. Accordingly the "compressed" top half of the image is shown as the same size as the downsampled data in the buffer.

The reason for this choice of convention - i.e., use of an example with 1:1 "compression" - is to avoid misleading the reader. This will be explained in the following paragraphs as a brief digression.

Actual size compression in, for example, a JPEG compression varies strongly with characteristics of the image, as well as a selection process by the human operator. As will be recalled, this type of compression operates by escalating discrimination of finer and finer chromatic detail in the image.

Therefore an image with little or no fine color detail can be compressed greatly without significant perceptible loss - even if the image is inspected closely by an expert. On the other hand, attempting a like degree of compression of an image with a great amount of fine color-detail variation may severely wash out or blur the many small color features into one another. In an extreme case the process may even create a false, averaged hue that is not present at all in the original image. Analogous luminance error is much less severe, though certainly present.

With this much variation among images it could be confusing to show any particular, arbitrarily selected amount of compression. This confusion would be further exacerbated by the fact that "quality" decisions selected by individual operators also vary strongly.

Hence an image accepted at a particular quality level by one operator - or for one purpose - may be entirely unacceptable to another operator, or even to the same operator but for a different purpose. For example, a photographer's batch of forty small "proof prints" submitted to a customer might be quite acceptable even if data for each image are downsampled and compressed to a 5 kbyte file.

The purpose is only to enable the customer to select which poses are preferred, and in fact the 200 kbyte batch can even be transmitted to the customer by e-mail without undue delay at customary slow dial-up speeds over conventional analog telephone lines. On the other hand, if a single one of those frames is then selected for high-quality printing, possibly that frame should be presented to the printer as a file of one or more megabytes.

Lest the 1:1 compression illustrated in Fig. 2 be itself confusing, please bear in mind that the actual numerical compression in a JPEG image, ignoring downsampling or upsampling, is commonly from a half order of magnitude to two or more orders of magnitude (i.e. by a factor of three to a hundred or more) for a representative image and typical consumer usage.

Now returning to the discussion of Fig. 2, after the first input half-image 22-23 has been downsampled into the buffer and compressed to form a first output half-image 31, the procedure is iterated for the bottom of the same input half-image 24-25. That is, the third and then the fourth input quarter-images 24, 25 are downsampled and layered into the buffer as reduced quarter-images 32, 35; and this accumulated bottom half-image 32-34 is then compressed to form the final output half-image 37.

During these steps the upper output half-image 31 is preserved in the output data as 33 and 36. Eventually in combination the upper and lower output half-images 36, 37 form the entire output image 36-37.

If the memory cannot accommodate an entire strip, then it is possible to fall back to either:
(a) an entire single row (or column - depending on the direction in which the incoming data are organized) - or
(b) a partial strip, i.e. several rows or columns but extending only partway across or down the image.

Still further, if it is not feasible to acquire an entire row or column at once, the system can break up the reception and processing into smaller operations - but this complicates the algorithm, paying a penalty in processing overhead for the use of smaller memory. Received increments need not be a full strip or row, as long as what is received provides enough information to scale down, and enough information to compress.

Conventional JPEG formatting is based upon 8x8-pixel squares. One relatively extreme approach is to receive or compress (or both) each of those squares separately, but even that strategy limits the system to scaling on the boundaries of those squares, not between them.

The smaller the increments, the less straightforwardly or generally they can be scaled down or compressed. For instance, if the system accepts a single row as the first unit of processing, that unit cannot be scaled vertically, only horizontally.

In the case of a data stream that is received in a compressed form 11, the piecemeal approach just outlined should be extended upstream to the preliminary decompression step as well. The same general approach is required, if it is assumed that the decompressed image cannot fit into the available memory. In other words, the incoming data stream is first stripwise (or otherwise incrementally) decompressed - before the piecemeal scaling and recompression mentioned above.

### 4. CONTINGENT PROCESSING

Not all images are candidates for compression using the method of Fig. 2. For example, assuming that an image is to be printed at unit resolution of 12 pixel/mm (300 pixel/inch), the desired overall image "resolution" (i.e. total number of pixels in one direction) for a typical image printout is larger than the original image.

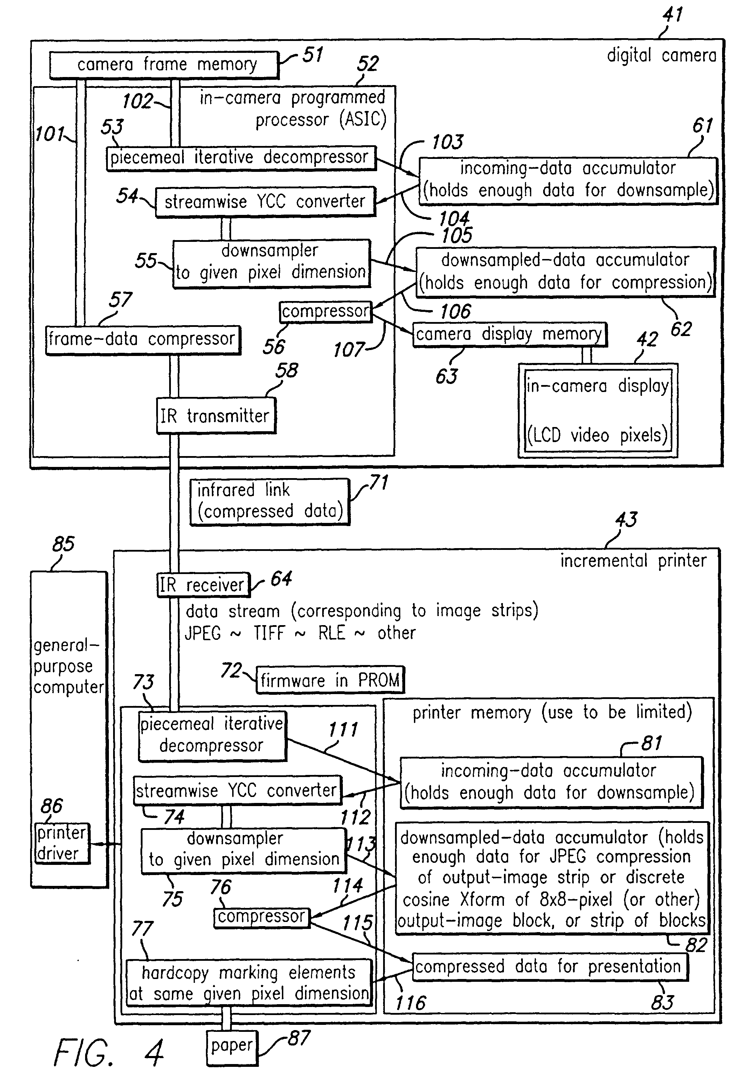

Such an image has to be scaled up before printing. Table A (Fig. 3) shows the sampling factor based on 12 pixel/mm final output - for five common print sizes in centimeters or inches, and three representative original-image sizes in MP (megapixels). As can be seen, the sampling factor is greater than unity (it is an upsampling) for all but four of the cases represented.

The Fig. 2 method, however, may yet be feasible if the operator and the intended use of the printout are amenable to a lower unit resolution, such as for example 8 pixel/mm (200 pixel/inch). Table B shows the sampling factor for this unit resolution, and for the same fifteen cases as Table A.

Here downsampling is seen to be possible in fifty or sixty percent of practical cases. Accordingly it may now be appreciated that no single data-handling regimen can be appropriate for all situations, and the contingent or "smart" data management recited in certain of the appended claims becomes particularly valuable.

Such adaptive management in essence tests the data and the operating circumstances - including the unit resolution deemed appropriate - to determine whether significant scaling-down of the original image is in order. If so, then the system performs the downsampling, and possibly also the iterative piecemeal operation, discussed in the preceding sections; but if not, then if possible the system branches to some other strategy.

### 5. APPARATUS

The image-related device can be a printer or instead a display, a scanner, a terrain or benthic mapping system, or in essence any system that transfers or stores image-like data. Even a digital book, or even a common display unit such as a video screen, can be downsampled for later more-limited display.

In considering any system for application of the described embodiments, a helpful basic characteristic is that the system will use the subject data for or within itself. Such a system can be programmed or otherwise designed to take account of its own limitations.

Two examples relating to a digital camera 41 (Fig. 4) entail transmission of picture data, either within the camera to a small display 42 for presentation to the camera operator or entirely out of the camera to a printer 43 for recording of the image on paper. As to the display, the system is completely closed and downsampling is always appropriate; however, for the printer there are various possibilities.

Other camera components include a camera frame memory 51 - at least part of which is erasable and removable, and serves as a cache for all the pictures taken with the camera. It will be understood of course that the camera includes many optical, electronic, electrooptical, mechanical and program-executing modules that are upstream of the frame memory 51 and are devoted to original acquisition of image data. All of those components, although naturally of great interest and importance to camera design as such, are outside the scope of this document.

The camera also includes a processor, which for high-volume retail-consumer cameras may advantageously be an application-specific integrated circuit (ASIC) 52. It performs all of the data movement and sequencing. A somewhat more common variation modernly is to perform the intensive computations in a digital signal processor (DSP), which is a much more general-purpose device than an ASIC.

Another key part of the camera for present purposes is the three-part memory complement 61-63 that serves the display. In some cases the various memory elements may be built into the ASIC.

Since image data may be stored in the frame memory 51 as JPEG- or otherwise-compressed files - although this is quite unusual in the present state of the art - the ASIC 52 may include a decompressor 53 that iteratively operates upon successive strips or segments of the data stream 102 from the frame memory. That operation may proceed analogously to the more-central processing that is described below.

In any event, decompressed or originally uncompressed data may next pass to the first accumulator bank 61 in the display-associated memory introduced earlier. These data remain in the memory unit 61 until enough information - "enough" according to the design adopted for the system - has been stored for downsampling.

From there the cached data 104 proceed to a color-space conversion stage 54, to express the image information in the YCC color space - a part of conventional JPEG processing which, as mentioned earlier, can be omitted in many practical cases.

Decompressed and possibly converted data 103 next flow to a scaling-down or downsampling module 55, which selectively passes a reduced quantity of data 105 back to the memory - but to a different memory portion 62, which is devoted to accumulating data for compression. When that accumulator 62 holds sufficient data for compression, those data 106 flow again to the ASIC but particularly to a compressor section 56 in the ASIC.

This section 56 performs whatever type of compression or other formatting is appropriate for use in the small LCD display of the camera, and then returns now-formatted data 107 to the final display-associated memory section 63. The data are held there for passage to the LCD itself.

With the possible exception of the frame memory 51, the camera components discussed so far are substantially a closed system. Accordingly some liberties can be taken with the use of file headers and markers, relative to more-standardized file formatting that is needed for data to be passed from one camera, computer, printer or computer to another.

In general, in such a closed system, the relationships between data quantities flowing through different parts of the system may be established once and for all when the system is designed. In particular, both the unit resolution and the physical size of the LCD display 42 (and accordingly the overall total pixel size) are fixed at manufacture.

After that, in operation of the system it should not be necessary to take steps to determine what data size relationships are; the design relationships can be assumed. There should be no necessity for contingencies in the processing protocol.

Considerably greater care should be taken - even though the principles of application are the same - with a system that straddles two wholly different pieces of equipment. This is the case with the camera 41 when operated in conjunction with the printer 43.

It is here that the variability of output-data quantities, discussed in section 3 above, comes into play. The paper 87 may be of various sizes, and the unit resolution is also variable. Hence the overall total-pixel size can vary widely, and in some systems it is advisable to provide contingent branching of the process to accommodate the variation.

In exceptional cases as noted earlier, data in the frame memory 51 may be stored precompressed; however, in more common configurations the frame memory holds uncompressed data - which are preferably compressed before passage to the printer. For that purpose a compressor stage 57 may be included in the camera ASIC 52.

Next the data advantageously proceed to an infrared transmitter 58 - or to a cable connector if direct wiring is to be employed. The IR stage 58 if present may be built directly into the ASIC 52 as illustrated or may instead be partly or entirely separate.

In any event the camera output data 71 flow to a receiving unit 64 in the printer 43. The receiver 64 may be an infrared subsystem, or a cable connector, or other suitable input/output component corresponding to the component 58 in the camera.

For some printers, as suggested in the illustration, it may be preferable to operate the programmed instructions in firmware 72 - a general-purpose processor reading instructions from a ROM or PROM - rather than in a hardware ASIC 52 or DSP as in the display driver within the camera. In addition there may be some contribution from software 86 operating in a general-purpose computer 85 (or from a program running in a raster-image processor, not shown). These various options are illustrated sheerly by way of example, without intending to indicate in any general way that some are more practical for some purposes than others.

Another evident difference is that the output data 116 in the printer flow to control modules 77 for operating the hardcopy marking devices of the printer, rather than to a display 42 as in the camera. Apart from these differences, the principles of operation as embodied in the printer are very much as in the camera.

Thus the intermediate blocks and functions at 73 through 76 in the printer are substantially identical (though in general they will process greater quantities of data) to the corresponding blocks and functions 53 through 56. Similarly the memory modules 81 through 83 in the printer are functionally identical (though larger) to the corresponding memory modules 61 through 63 in the camera.

### 6. METHOD

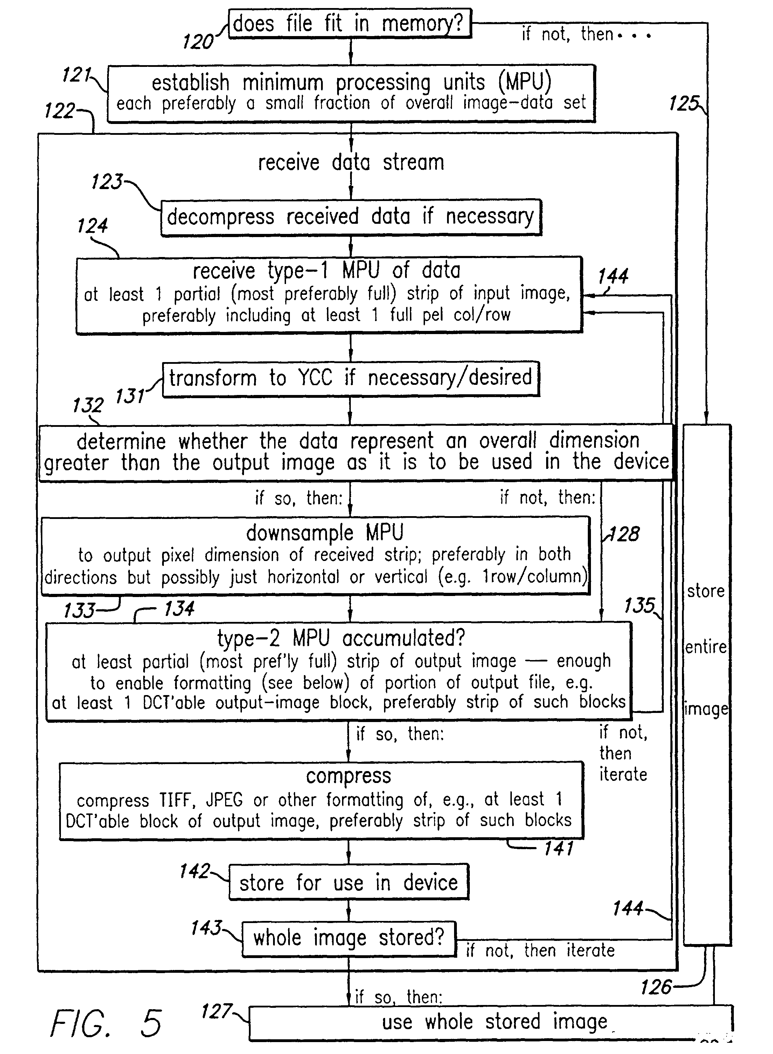

In view of all the foregoing, operation of the preferred method will be largely self explanatory from the flow chart of Fig. 5 - which is intended to cover operation of a relatively general system such as the printer control of elements 73 through 76 discussed above. It may be seen, however, that the overall scheme includes branching at 120 and 132, depending upon the data relationships.

The result is that some method 126 (e.g. conventional storage of the entire image file) to prepare for use 127 of the whole image is employed where appropriate; and the novel steps 121 through 144 of the present invention are used otherwise. Even in the latter case, as suggested earlier a more-conventional bypass 128 is provided around the down-sampling step 133, for use when the incoming data do not represent a greater overall dimension than the output image as it is to be used in the camera.

The drawback of following the bypass path 128 is that image artifacts are often generated by serial compression and decompression without the intermediate down-scaling. The benefits of the described embodiments, however, are enjoyed whenever the favorable size relationships are present.

In any event, the method includes iterations 135, 144 of the core operations 124, 128 (when applicable), 131 through 134, and 141 through 143. These iterations with small data quantities are exploited to systematically layer the downsampled (when applicable) and compressed image data into small memories.

TIFF or JPEG formatting, or other JPEG-like variants that make use of the direct cosine transform (DCT) or related Fourier analysis, can be used even though the entire image is never manipulated at once. The overall result is significant economy without image degradation.

The preferred embodiment is very versatile. As noted earlier, even the conversion from RGB to YCC can be omitted and the benefits of the invention enjoyed while transferring data in RGB. Similarly transmission and processing can be performed in virtually any color space including other perceptual spaces, other machine-language spaces such as subtractive CMY or CMYK, or hybrid HPG (hue plus gray) space.

The above disclosure is intended as merely exemplary, and not to limit the scope of the claims.

## Claims

1. A method of receiving input-image data in an image-related device having a memory whose size is to be limited; said method comprising the steps of:
a. receiving (122) a data stream containing input-image data and corresponding to a series of successive strips of an image;
b. determining (120) whether the data stream represents an overall pixel spatial dimension greater than desired in an image as it is to be used in the image-related device;
c. establishing (121) minimum units of processing that are related to a format of the data stream, to an output-image format, and to the below-recited steps; and
d. during the receiving step, after receiving data for at least a first of said minimum units of processing:
(i) if it is determined at step b. that the received data stream represents an overall pixel spatial dimension greater than desired downsampling (133), in at least one direction, the data for the first received minimum unit of processing,
(ii) accumulating (134) the data or the downsampled data for said received minimum unit of processing and the data or downsampled data for at least a second of said minimum units of processing, and
(iii) then compressing (141) the accumulated data or downsampled data.

2. A method as in claim 1, wherein:
the first unit of processing is at least a partial strip of the image, said at least partial strip containing enough information to enable said downsampling.

3. A method as in claim 2, wherein:
the first unit of processing is a full strip of the image, said full strip comprising at least one full pixel column or row.

4. A method as in claim 1, wherein: the second unit of processing is at least a partial strip of the image as it is to be presented by the image-related device, said at least partial strip containing enough information to enable said compressing.

5. A method as in claim 1, wherein: the second unit of processing is a full strip of the image as it is to be presented by the image-related device, said full strip comprising at least one full pixel column or row.

6. A method as in claim 1, wherein: the downsampling step comprises downsampling the data to a pixel dimension of the received strip as it is to be used in the image-related device.

7. A method as in claim 1, wherein the compressing step is selected from the group comprising:
JPEG compression; and
data formatting which is of a type associated with TIFF files.

8. A method as in claim 1, wherein the accumulating step comprises accumulating a quantity of the downsampled data selected from the group consisting of:
enough of said downsampled data to enable JPEG compression of a strip of the image as it is to be used in the image-related device;
enough of said downsampled data to enable TIFF formatting of a portion of the image as it is to be used in the image-related device;
enough of said downsampled data to represent at least one discrete-cosine-transformable block of the image as it is to be used in the image-related device, for application of a discrete cosine transform thereto;
at least enough of said downsampled data to represent at least one eight-by-eight-pixel block of the image as it is to be used in the image-related device, for application of a discrete cosine transform thereto; and
at least enough of said downsampled data to represent a strip of eight-by-eight-pixel blocks of the image as it is to be used in the image-related device, for application of a discrete cosine transform thereto.

9. An image-related device (41, 43) having a memory (63, 81-83) whose size is to be limited, and comprising:
a data receiver (52, 64) for receiving a data stream containing image data and corresponding to a series of successive strips of an image;
a programmed processor (52, 72) provided with:
means for determining (120) whether the data stream represents an overall pixel dimension greater than desired in an image as it is to be used in the image-related device;
means for downsampling (55, 75) operable when it is determined that the received data stream represents an overall pixel spatial dimension greater than desired to downsample, in at least one direction, the data for the first received minimum unit of processing;
means for accumulating (62, 82) the data or the downsampled data for said received minimum unit of processing and the data or downsampled data for at least a second of said minimum units of processing,
means for compressing (56, 76) the accumulated data for at least part of an image strip to be presented, and
means for storing (107, 115) the compressed data for presentation; and
means (42, 77) for presenting the image based upon the stored compressed data (63, 83).

## Revendications

1. Procédé de réception de données d'images d'entrée dans un dispositif lié à l'image ayant une mémoire dont la dimension doit être limitée ; ledit procédé comprenant les étapes consistant à :
a. recevoir (122) un train de données contenant des données d'image d'entrée et correspondant à une série de bandes successives d'une image ;
b. déterminer (120) si le train de données représente une dimension spatiale globale de pixels plus grande que celle désirée dans une image telle qu'elle doit être utilisée dans le dispositif lié à l'image ;
c. établir (121) des unités minimales de traitement qui sont liées à un format du train de données, à un format d'image de sortie et aux étapes énoncées ci-dessous ; et
d. durant l'étape de réception, après réception de données pour au moins une première desdites unités minimales de traitement :
(i) s'il est déterminé à l'étape b que le train de données reçu représente une dimension spatiale globale de pixels plus grande que celle désirée, réduire en résolution (133), dans au moins une direction, les données pour la première unité minimale de traitement reçue,
(ii) accumuler (134) les données ou les données réduites en résolution pour ladite unité minimale de traitement reçue et les données ou les données réduites en résolution pour au moins une deuxième desdites unités minimales de traitement, et
(iii) comprimer (141) ensuite les données accumulées ou les données réduites en résolution.

2. Procédé selon la revendication 1, dans lequel :
la première unité de traitement est au moins une bande partielle de l'image, ladite au moins une bande partielle contenant suffisamment d'informations pour permettre ladite réduction de résolution.

3. Procédé selon la revendication 1, dans lequel :
la première unité de traitement est une bande complète de l'image, ladite bande pleine comprenant au moins une colonne ou une ligne complète de pixels.

4. Procédé selon la revendication 1, dans lequel :
la deuxième unité de traitement est au moins une bande partielle de l'image, ladite au moins une bande partielle contenant suffisamment d'informations pour permettre ladite compression.

5. Procédé selon la revendication 1, dans lequel :
la deuxième unité de traitement est une bande complète telle qu'elle doit être présentée par le dispositif lié à l'image, ladite bande complète comprenant au moins une colonne ou une ligne complète de pixels.

6. Procédé selon la revendication 1, dans lequel :
l'étape de réduction de résolution comprend la réduction de résolution des données à une dimension de pixel de la bande reçue telle qu'elle doit être utilisée dans le dispositif lié à l'image.

7. Procédé selon la revendication 1, dans lequel l'étape de compression est sélectionnée à partir du groupe comprenant :
compression JPEG ; et
formatage de données qui est d'un type associé à des fichiers TIFF.

8. Procédé selon la revendication 1, dans lequel l'étape d'accumulation comprend l'accumulation d'une quantité des données réduites en résolution sélectionnée parmi le groupe comprenant :
suffisamment desdites données réduites en résolution pour permettre une compression JPEG d'une bande de l'image telle qu'elle doit être utilisée dans le dispositif lié à l'image ;
suffisamment desdites données réduites en résolution pour permettre un formatage TIFF d'une partie de l'image telle qu'elle doit être utilisée dans le dispositif lié à l'image ;
suffisamment desdites données réduites en résolution pour représenter au moins un bloc transformable en cosinus discret de l'image telle qu'elle doit être utilisée dans le dispositif lié à l'image, pour l'application d'une transformée en cosinus discrète sur celles-ci ;
au moins suffisamment desdites données réduites en résolution pour représenter au moins un bloc de huit fois huit pixels de l'image telle qu'elle doit être utilisée dans le dispositif lié à l'image, pour l'application d'une transformée en cosinus discrète sur celles-ci ;
au moins suffisamment desdites données réduites en résolution pour représenter une bande de blocs de huit fois huit pixels de l'image telle qu'elle doit être utilisée dans le dispositif lié à l'image, pour l'application d'une transformée en cosinus discrète sur celles-ci.

9. Dispositif lié à l'image (41, 43) ayant une mémoire (63, 81-83) dont la dimension doit être limitée et comprenant :
un récepteur de données (52, 64) comprenant :
des moyens pour déterminer (120) si le train de données reçu représente une dimension globale de pixels plus grande que celle désirée dans une image telle qu'elle doit être utilisée dans le dispositif lié à l'image ;
des moyens de réduction de résolution (55, 75) opérationnels quand il est déterminé que le train de données reçu représente une dimension spatiale globale de pixels plus grande que celle désirée pour réduire en résolution, dans au moins une direction, les données pour la première unité minimale de traitement reçue ;
des moyens pour accumuler (62, 82) les données ou les données réduites en résolution pour ladite unité minimale de traitement reçue et les données ou les données réduites en résolution pour au moins une deuxième desdites unités minimales de traitement, et
des moyens pour comprimer (56, 76) les données accumulées pour au moins une partie d'une bande d'image à présenter, et
des moyens pour mémoriser (107, 115) les images comprimées pour la présentation ; et
des moyens (42, 77) pour présenter l'image basée sur les données comprimées mémorisées (63, 83).

## Patentansprüche

1. Ein Verfahren zum Empfangen von Eingangsbilddaten in einer bildbezogenen Vorrichtung mit einem Speicher, dessen Größe begrenzt werden soll, wobei das Verfahren folgende Schritte aufweist:
a. Empfangen (122) eines Datenstroms, der Eingangsbilddaten enthält und einer Reihe von aufeinanderfolgenden Streifen eines Bildes entspricht;
b. Bestimmen (120), ob der Datenstrom eine räumliche Pixelgesamtdimension darstellt, die größer ist als die in einem Bild erwünschte, so wie dasselbe in der bildbezogenen Vorrichtung verwendet werden soll;
c. Erstellen (121) von kleinsten Verarbeitungseinheiten, die auf ein Format des Datenstroms, auf ein Ausgangsbildformat und auf die unten erwähnten Schritte bezogen sind; und
d. während des Schritts des Empfangens, nach dem Empfangen der Daten für zumindest eine erste der kleinsten Verarbeitungseinheiten:
(i) wenn bei Schritt b. bestimmt wird, daß der empfangene Datenstrom eine räumliche Pixelgesamtdimension darstellt, die größer als die gewünschte ist, Abwärtsabtasten (133) der Daten, in zumindest einer Richtung, für die erste kleinste Verarbeitungseinheit,
(ii) Ansammeln (134) der Daten oder der abwärts abgetasteten Daten für die empfangene kleinste Verarbeitungseinheit und der Daten oder abwärts abgetasteten Daten für zumindest eine zweite der kleinsten Verarbeitungseinheiten, und
(iii) anschließendes Komprimieren (141) der angesammelten Daten oder abwärts abgetasteten Daten.

2. Ein Verfahren gemäß Anspruch 1, bei dem:
die erste Verarbeitungseinheit zumindest ein Teilstreifen des Bildes ist, wobei der zumindest Teilstreifen genügend Informationen enthält, um das Abwärtsabtasten zu ermöglichen.

3. Ein Verfahren gemäß Anspruch 2, bei dem:
die erste Verarbeitungseinheit ein vollständiger Streifen des Bildes ist, wobei der vollständige Streifen zumindest eine vollständige Pixelspalte oder - zeile aufweist.

4. Ein Verfahren gemäß Anspruch 1, bei dem:
die zweite Verarbeitungseinheit zumindest ein Teilstreifen des Bildes ist, so wie dasselbe durch die bildbezogene Vorrichtung präsentiert werden soll, wobei der zumindest Teilstreifen genügend Informationen enthält, um das Komprimieren zu ermöglichen.

5. Ein Verfahren gemäß Anspruch 1, bei dem:
die zweite Verarbeitungseinheit ein vollständiger Streifen des Bildes ist, so wie dasselbe durch die bildbezogene Vorrichtung präsentiert werden soll, wobei der vollständige Streifen zumindest eine vollständige Pixelspalte oder -zeile aufweist.

6. Ein Verfahren gemäß Anspruch 1, bei dem:
der Abwärtsabtastschritt ein Abwärtsabtasten der Daten auf eine Pixeldimension des empfangenen Streifens, so wie derselbe in der bildbezogenen Vorrichtung verwendet werden soll, aufweist.

7. Ein Verfahren gemäß Anspruch 1, wobei der Komprimierungsschritt aus der Gruppe ausgewählt wird, die folgende Schritte umfaßt:
JPEG-Komprimierung; und
Datenformatierung, die einem TIFF-Dateien zugeordneten Formatierungstyp entspricht.

8. Ein Verfahren gemäß Anspruch 1, bei dem der Ansammelschritt ein Ansammeln einer Menge der abwärts abgetasteten Daten aufweist, die aus der Gruppe ausgewählt sind, die folgendes umfaßt:
genügend der abwärts abgetasteten Daten, um eine JPEG-Komprimierung eines Streifens des Bildes zu ermöglichen, so wie dasselbe in der bildbezogenen Vorrichtung verwendet werden soll;
genügend der abwärts abgetasteten Daten, um eine TIFF-Formatierung eines Abschnitts des Bildes zu ermöglichen, so wie dasselbe in der bildbezogenen Vorrichtung verwendet werden soll;
genügend der abwärts abgetasteten Daten, um zumindest einen Block des Bildes, der mittels einer diskreten Kosinus-Transformation umgewandelt werden kann, darzustellen, so wie dasselbe in der bildbezogenen Vorrichtung verwendet werden soll, zum Zweck einer Anwendung einer diskreten Kosinus-Transformation auf dasselbe;
zumindest genügend der abwärts abgetasteten Daten, um zumindest einen 8x8-Pixelblock des Bildes darzustellen, so wie dasselbe in der bildbezogenen Vorrichtung verwendet werden soll, zum Zweck einer Anwendung einer diskreten Kosinus-Transformation auf dasselbe; und
zumindest genügend der abwärts abgetasteten Daten, um einen Streifen von 8x8-Pixelblöcken des Bildes darzustellen, so wie dasselbe in der bildbezogenen Vorrichtung verwendet werden soll, zum Zweck einer Anwendung einer diskreten Kosinus-Transformation auf dasselbe.

9. Eine bildbezogene Vorrichtung (41, 43) mit einem Speicher (63, 81 - 83), dessen Größe begrenzt werden soll, die folgende Merkmale aufweist:
einen Datenempfänger (52, 64) zum Empfangen eines Datenstroms, der Bilddaten enthält und einer Reihe von aufeinanderfolgenden Streifen eines Bildes entspricht;
einen programmierten Prozessor (52, 72), der mit folgenden Merkmalen versehen ist:
Einrichtung zum Bestimmen (120), ob der Datenstrom eine räumliche Pixelgesamtdimension darstellt, die größer ist als die erwünschte in einem Bild, so wie dasselbe in der bildbezogenen Vorrichtung verwendet werden soll;
Einrichtungen zum Abwärtsabtasten (55, 75), die betreibbar sind, um in zumindest einer Richtung die Daten für die erste empfangene kleinste Verarbeitungseinheit abwärts abzutasten, wenn bestimmt wird, daß der empfangene Datenstrom eine räumliche Pixelgesamtdimension darstellt, die größer als erwünscht ist;
Einrichtungen zum Ansammeln (62, 82) der Daten oder der abwärts abgetasteten Daten für die empfangene kleinste Verarbeitungseinheit und der Daten oder abwärts abgetasteten Daten für zumindest eine zweite der kleinsten Verarbeitungseinheiten;
Einrichtungen zum Komprimieren (56, 76) der angesammelten Daten für zumindest einen Teil eines zu präsentierenden Bildstreifens; und
Einrichtungen zum Speichern (107, 115) der komprimierten Daten zum Zweck einer Präsentation; und
Einrichtungen (42, 77) zum Präsentieren des Bildes auf der Basis der gespeicherten komprimierten Daten (63, 83).
